(19) Europäisches Patentamt
European Patent Office
Office européen des brevets

(11) **EP 4 280 534 A1**

(12) **EUROPEAN PATENT APPLICATION**

(43) Date of publication:
**22.11.2023 Bulletin 2023/47**

(21) Application number: **22382485.5**

(22) Date of filing: **19.05.2022**

(51) International Patent Classification (IPC):
**H04L 9/30** *(2006.01)*    **H04W 12/02** *(2009.01)*

(52) Cooperative Patent Classification (CPC):
**H04L 9/3073; H04W 12/106; H04W 12/69;**
H04L 2209/46; H04L 2209/84

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GMV Soluciones Globales Internet,
S.A.U.
28760 Tres Cantos Madrid (ES)**

(72) Inventors:
• **León Cobos, Juan Jesús**
  **28760 Tres Cantos (ES)**
• **Celis de la Hoz, Pedro**
  **28760 Tres Cantos (ES)**
• **Rodríguez Bescós, Samuel**
  **28760 Tres Cantos (ES)**
• **García Almajano, José Jorge**
  **28760 Tres Cantos (ES)**

(74) Representative: **Elion IP, S.L.
Paseo Castellana, 150-4 dcha
28046 Madrid (ES)**

(54) **KNOWLEDGE-BASED MESSAGE AUTHENTICATION FOR THE INTERNET OF THINGS**

(57)    The present disclosure relates to a method of authenticating messages and message-composing entities deployed within an Internet of Things (IoT) network. And to a scheme for securely conveying information between entities in an IoT network and dynamically controlling their behavior in a secure way at the same time as authentication is achieved.

According to the present disclosure, a more versatile, resourceful and convenient alternative to the use of a classical PKI for message authentication can be achieved by combining logic programming with a novel use of cryptographic primitives adapted from Identity Based Cryptography (IBC).

The information originated at different entities within the network is conveyed in the form of mathematical expressions, making up clauses and predicates in accordance with the paradigm of logic programming. A collection of clauses and predicates either embedded in messages or known to the entity receiving the message are considered as a knowledge base, upon which queries may be performed. As queries are performed, information with various levels of confidence may be extracted and verified. In this context signature verification is achievable by means of built-in predicates, providing for both the authentication of a message and a message-composing entity. Upon signature verification, results of queries may be used to control the behavior of an entity receiving a message.

The novel adaptation of the cryptographic primitives used in IBC presented herein results from using a knowledge base to generate public and private keys, instead of using an identity, so that the knowledge base becomes securely linked to the public and private keys.

FIG. 4

**Description**

The present disclosure is encompassed within the field of message authentication and, more in particular, within the field of signature-based message authentication for the Internet of Things.

BACKGROUND

The state of the art of cryptography applied to authentication is widely known and can be consulted in a number of sources.

Authentication in the context of the present disclosure deals with methods for the verification of the signatory of a message. Such methods are based on cryptographic techniques, although they also involve additional considerations. In the context of message sending from a message-composing entity to a receiving entity, an authentic message is one that is correctly signed in a cryptographically secure way by the message-composing entity or by some other entity in which the receiving entity deposits its trust. A cryptographic signature is a primitive that uses a private key to generate an artifact, called a signature, which is related to the message. The purpose of a cryptographic signature is essentially twofold: 1) to provide confidence as to the sender of the message and 2) to provide confidence that the message has not been modified after it was sent (i.e. to provide confidence about the integrity of the message). In the following, gaining these confidences may also be referred to as "authenticating a message" or "authenticating the sender of the message" or "authenticating the entity that has composed the message", indistinctly.

Signatures can be verified by the receiver if the receiver is in possession of the specific public key that is mathematically linked to the private key that was used to sign. Therefore, when a signature is verified, the confidence gained by the receiver depends in an essential way on how sure the receiver is on who possesses the private key used to sign, and whether the public key that the receiver has used to verify the signature indeed is mathematically related to that private key.

The concept of identity underlays that of authentication. An authentication protocol can only verify that a given message has come from an already recognized identity, but it cannot establish the identity of the entity in question. Such establishment is commonly referred to as identification. While authentication validates the message as coming from a recognized source, identification validates the source of the message as a recognized member of some relevant community. Thus, identification is an additional requirement separate from authentication.

In the current state of the art, a standard way to bind an identification to an entity is by means of digital certificates (which in the following may simply be referred to as certificates) issued by some trusted party. A certificate is an electronic document that links an identity to a public key, and somehow guarantees that the corresponding private key is in possession of the owner of that identity. As this guarantee can only be granted by enforcing a number of policies involving the owners of the keys and the issuers of certificates, the correct use of certificates in large amounts require extensive governance effort. Such governance is made possible by a set of technologies and procedures known as Public Key Infrastructures or PKIs. These infrastructures are quite complex and, in particular, do not scale very well, so their adequacy for very large deployments such as those required by the Internet of Things (IoT), where potentially millions of entities are involved, remains a challenge.

Identification can also be achieved without employing certificates, using so called Identity Based Cryptography (IBC). The original concept of IBC was proposed in 1984 by Adi Shamir, although it was not known how to make it practical until the application of pairing-based cryptography in 2001. IBC essentially consists in a Public Key Cryptosystem where, instead of the entity generating a random pair of keys (private and public), the entity could use some given information related to itself (some identifier) as the public key. Any information could be used as identifier as long as it is linked to the entity in a way that could not later be denied. The corresponding private key would be generated from the identifier by a "generation centre" (in Shamir's words) that would ascertain that the private key was actually given to the right entity/owner after adequate and secure identification. The generation of the private key from the identifier (i.e. from the public key) requires knowledge of another specific key known as a Master Key. The security of this scheme relies on the fact that it is computationally unfeasible to generate a private key without the knowledge of the Master Key.

The use of IBC in IoT has been analyzed to some extent. In some paradigmatic IoT frameworks such as Intelligent and Autonomous Vehicles, several solutions were already proposed back in 2007. However the practical use of IBC in IoT authentication remains mostly unexplored, and for instance in a very large survey (cf. Mohamed Amine Ferrag et al, "Authentication Protocols for Internet of Things: A Comprehensive Survey" 2017) is not even explicitly mentioned.

Although the essential aspect of IBC is the direct involvement of the identity of the signatory in the generation of the keys, actually the technology behind IBC, known as pairing based cryptography, enables the creation of a private key from any public key, and the derivation of the public key from any given piece of information. This allows essentially any digital material to be used in the process of key generation, and not specifically the identity. At this time, the use of IBC primitives to generate private keys from information different from an identity is a largely unexplored topic, and is missing in the state of the art related to authentication, as it would seem obvious that the assurance of the identity is the essential feature of Identification, other information being less relevant for the authentication process.

According to the state of the art, the specifics of message authentication for IoT focus essentially on three factors: Firstly, the huge number of entities potentially involved. This could be a real problem if certificates are used, because of scalability issues, as already pointed out. Secondly, entities may need to be low-cost. In turn this implies that communication protocols should ideally be simple and lightweight, in so far they should be able to run in devices with low power, low memory and/or low computing capacity. Also low power consumption may suggest that authentication should be accomplished using minimum communication, and should be possible in particular in a broadcast environment, where one message should be sufficient to achieve authentication (as opposed to a back and forth interchange of messages which would consume more power). Thirdly, devices could be placed anywhere and work unattended, although this might not always be the case. For example, in a vehicular network (a well-studied case related to IoT technology) an automobile is not unattended. Still other entities involved in a vehicular network such as so called Road Side Units or RSUs, a term used to describe intelligent traffic signals, environmental or traffic sensors and the like, which are to be deployed in very large quantities (compared to the number of vehicles), typically are located in places with easy access and work unattended.

Sometimes the first two issues of dealing with high number of low-cost entities have been addressed by the organization of entities in hierarchical layers where devices in different layers may have different levels of complexity and cost. This strategy is usual in scenarios where edge-computing paradigms are to be applied.

Regarding the third issue of location and exposure, a relevant aspect is the use of tamper-proof solutions to guarantee the security of the private keys used by the entities that comprise an IoT network. A problem is that low cost, easily deployable solutions cannot possibly provide the same security that is found in expensive, attended devices such as IT hardware security modules (HSMs). The most advanced technology in this respect may be the development of the TPM chip by the Trusted Computing Group. According to NIST, a TPM chip is a tamper-resistant integrated circuit built into some motherboards that can perform cryptographic operations (including key generation) and protect small amounts of sensitive information, such as passwords and cryptographic keys. The use of the TPM in high numbers in the computer industry might suggest low cost. However, as of this writing, no FIPS-approved TPM chips are yet available, and if there were, they would be expensive. In summary, the use of tamper-proof solutions in IoT devices necessarily involves a cost vs risk tradeoff.

It is worth to point out that the problem of tamper proofing does not only relate to the security of keys. In some scenarios, the manipulation of some other values or functions within a device might lead to attacks. For instance, suppose a sensor element is to provide some reading to a remote element, which in turn raises and alarm in case the reading is different from some reference value stored in the remote element. Even if the message that contains the reading is authenticated, manipulation of the reference value in the remote element might have similar consequences as impersonating the sensor by getting access to its private key in order to send a fake value. Thus, in principle, one would assume that a relevant part of the data and software contained in an entity that is part of an IoT network should be protected from tampering, and not only the keys.

As it happens in other scenarios, security aspects in IoT must be analyzed in the context of potential attacks, both any specific attacks for IoT situations as well as classical attacks as applied to IoT entities.

For example, a feature of IoT entities that leads to specific attacks may be their exposure due to small size and public location. In some cases an IOT entity could be moved from its intended location to a different one, resulting in inadmissible consequences. This is called a displacement attack. This is one attack that does not make much sense in a data center but needs to be considered in IoT.

In turn, classical attacks applicable to IoT might pose a greater challenge than in other scenarios due to restrictions in size or power. For example, relay attacks and replay attacks, which are instances of so-called Man-In-the-Middle (MitM) attacks. The state of the art in protection against relay attacks typically involves some capacity to measure times with great accuracy, which might not be readily available in low cost devices. While it is expected that the deployment of new technologies such as Ultra-Wideband may increase the difficulty to carry out these attacks, such technology is expensive and often unsuitable for IoT. Thus, such MitM-type attacks are still a relevant challenge in the security of the IoT.

As already mentioned, an interesting concept that might help defining a simple, yet secure authentication scheme for IoT in face of the challenges presented above is a hierarchical organization of IoT entities in security layers. Such an organization may result from noticing that Information within the messages may have different levels of sensitivity, implying different protection needs and different levels of assurance. In the simplest characterization it may be assumed that all information is originated at just two types of information sources, depending on the sensitivity of the information they provide, as follows:

- a) Sources of general information, i.e. information that is not especially sensitive, and where low cost is the prevailing design guideline.
- b) Sources of more sensitive information i.e. information where integrity and authenticity must be preserved and where high security is the prevailing design guideline.

In a physical realization of an IoT network, these sources of information would be different entities with different levels of protection. Entities that provide sensitive information would be located within a so-called high security layer. Such layer would be defined in terms of physical location, connectivity, access restrictions and other such security-related considerations. In turn, entities that provide general information would be located within a so-called low-security layer, where protection is limited by cost and power consumption considerations.

Since generally cost increases as security requirements increase, a cost effective approach would demand that acceptable levels of overall security be achieved while minimizing the number of entities located in the high-security layer, i.e. a solution is preferred from a cost perspective where most entities within the IoT network would be located within the low-security level.

For example, the high security layer may consist of strongly hardened computers placed within a secure zone where access is restricted, and where rigid security procedures are enforced. Entities in this zone can be better protected; at this level only few entities are deployed, and better protection is thus affordable. Confidence placed in these entities and the information they provide could be designed according to stronger security requirements.

The purpose of the entities in the high-security layer would be to somehow guarantee the security of the network, and in particular the security of message authentication and to the extent possible of message contents, by securing sensitive information used within the network. For this reason, from now on entities located in the high-security layer may be referred to as guarantor entities, or guarantors.

All other entities in the network would be located in the low-security layer and constitute the majority on entities in the IoT network. Entities deployed in the low security layer are deployed in big numbers and they feature limited, affordable security. At this layer tamper-proofing and other security factors might be constrained so that entities are simple and low cost. Confidence placed in these entities is likewise limited. As an example, a low security level may refer to small devices physically located in the street or some other convenient public area where they can be accessed with minimum restrictions by potential attackers.

According to a classical security consideration, when different security layers are defined, communications between entities in different layers would need to be restricted as much as possible and strongly secured. This concept is one of the aspects that follows a wider strategy usually known as defense-in-depth. According to this concept, all entities receiving messages (in the following, also referred to as receiving entities) will be located in the low security layer, and they will receive messages from so-called message-composing entities, also located in the low security layer. In order for these messages to include sensitive information originated at the guarantor entities, the guarantor entities would communicate sensitive information previously to the message-composing entities in a secure way. The layered approach would imply that guarantor entities only communicate with the message-composing entities, i.e. no communication would ever be directly established between the guarantors and the receiving entities, resulting in lower cost of the receiving entities while security is preserved.

In order to reduce overall cost, it is desired to limit the number of guarantor entities, it is noted that cost efficiencies might be achieved if each guarantor entity conveys information to several message-composing entities. Message composing entities might in turn be regarded as more expensive that receiving entities, considering they need to transmit messages and to establish secure communication with the guarantors, while receiving entities need only receive messages. Thus, it makes sense that each message-composing entity conveys information to several receiving entities. Cost efficiencies arise from the sensible assumptions that more costly guarantor entities will be required in lower numbers than the more affordable message-composing entities, and in turn message-composing entities will be required in lower numbers than inexpensive receiving entities.

As previously mentioned, the messages that reach the receiving entities would need to include information originated at a guarantor entity as well as information originated at the message-composing entity. This information should be combined in a way that is easily processed in the receiving entity while the security provided by the assurance of the information originated in the guarantor is preserved. This is a challenge that involves deciding where every piece of information is originated and how to combine them. The decision to originate information in one layer or the other would require a trade-off typically considering the origin and nature of the information, as well as cost implications and security implications.

A number of relevant considerations for the present disclosure regarding the current state-of-the-art relate to the way information from the guarantor entities and information from the message-composing entities may be combined to be delivered to the receiving entities. Combination of information is discussed in the following from two perspectives: a security perspective and a semantic perspective.

The security perspective of message combination is first discussed. The state-of-the-art mechanism to securely combine information into a single message so that it can be properly authenticated using signatures would be having the guarantor entity sign its part of the information (assuming that the guarantor entity knows precisely what part of the information it provides will be conveyed to the receivers), and the message-composing entity sign either its part of the information or the complete message (both approaches would be conceptually the same from a security perspective). According to the state-of-the-art, a PKI could be deployed for this purpose, and in order to be able to authenticate messages the receiver would be required to verify at least two signatures, and to store certificates corresponding to entities in both levels. In addition, as keys for entities in the low security level would need to be rotated often (because of the lower level of trust placed in that level) then so would need to be the certificates stored at the receiver. This approach would require important CPU power and storage capacity at the receivers, as well as some means to update certificates. An alternative to reduce certificate storage requirements would be that the certificate of each sender is sent within the message. However this strategy would further increase the number of signatures to be verified for message authentication and also would require larger bandwidth and power consumption. Furthermore, the low security confidence placed in the low security level might require the receiver to check for possible revocation of these certificates before each signature is verified (or at least quite often). If this check is to be initiated from the receivers, they might actually end up being as complex and as expensive as the message-composing entities. All these issues are well known in PKI-governed schemes, but their importance for IoT skyrockets, primarily because of the potentially enormous number of entities, and also to some extent because of the importance of power and cost implications.

The natural conclusion is that the use of the traditional PKI technology even in this quite simple two-layer scenario is actually unable to solve message authentication issues in an efficient and affordable way. It is desirable at least that only one signature (at most) needs to be verified at the receiver, and that a revocation service need not be consulted from the receivers, so that they need not be equipped with mechanisms to start communications (but only to receive messages). It would also be very interesting that certificates need not be stored in such large quantities at the receivers, in order to simplify the provisioning process during entities' manufacturing. Actually, the best situation would be that no certificates be required at all.

The semantic perspective of message combination is next discussed. There are of course many ways to combine information, but some are better than others for the exploitation of synergies, so that the result of the information combined provides more value than the simple union of the information. An interesting one discussed in the following is the combination based on logic programming.

The logic programming paradigm essentially deals with the topics of formal logic and automatic deduction, as well as with programs and programming languages that enable practical uses of those topics in computing science. Logic programming is typically done by means of declarative languages, and executed by language interpreters.

In logic programming the program's behavior is based on expressions of formal logic, typically in the form of mathematical statements. The compilation of a number of such mathematical statements is usually referred to as a knowledge base. The concept of knowledge base originated in the domain of expert systems, which were the first knowledge-based systems. From a conceptual point of view, a knowledge base aims to represent facts about the world and ways of reasoning about those facts to deduce new facts. From a practical point of view, a knowledge base is herein simply defined as a collection of mathematical statements known as clauses and/or predicates.

Before defining clauses and predicates, it is pointed out that the definition of a knowledge base as a collection allows to define the combination of two or more knowledge bases simply as the collection of all clauses and/or predicates that are included in the knowledge bases that are combined.

Clauses can be defined as expressions that relate objects and properties of objects using operators. Typically operator types include logical (such as AND, OR, IF, IFF, NOT, etc.), relational (such as =, >, <, etc.) and arithmetic (such as +, -, *, etc.). Mathematical expressions involving variables and values can also be regarded as a particular case of clauses, wherein variables are specific types of objects, and values are specific types of properties. Herein the terms object and variable will be used indistinctly; the same applies to the terms property or value indistinctly.

Two types of clauses are typically considered: facts and rules. A fact is a statement that explicitly states a relation between objects and properties, for instance "Tom is a cat", "cats are domesticated animals" or "The value of X is 3", meaning that being a cat is a property of Tom, and 3 is a property of variable X (meaning its value, so an equivalent fact would be "X=3"). A rule is a statement defining implicit relations between objects, and/or between rules. Examples are "Sam is the father of Paul", or "X = Y" which use the relationships "being father of" and "equality". Another example is "Bill is the son of Jim if Jim is the father of Bill", which uses the relationship "if" to relate two rules. In the simplest cases, clauses may be just mathematical expressions on meaningful variables that need to be satisfied, such as "X+Y+Z=11".

Predicates are defined as a convenient collection of one or more clauses and procedures. Usually predicates are characterized by two properties: First, predicates are identified by a name and have a number of arguments (possibly zero). Second, predicates evaluate to either true or false depending on the properties (i.e. values) of the arguments.

One might ask what the advantage is of having a name for the concept "one or more clauses" instead of just dealing with clauses. Intuitively, the purpose of predicates is somewhat similar to that of functions in procedural programming: to allow the use of familiar names to refer to more complex constructions, so allowing levels of abstraction.

This can be better illustrated by example. For instance, suppose that a predicate to obtain the minimum between two given values is to be built. This predicate is denoted as min(X, Y, M), a predicate with name "min" and three arguments (X,Y,M), and this predicate should be built so that "M is the minimum value of X and Y". However in logic programming min() is not a function that receives two values X, Y and returns a third value M. What it is meant by building that predicate is that it is desired to find a clause or collection of clauses, which will be referred to as min(X, Y, M), that evaluates to true whenever M is actually the minimum of the values X and Y, and evaluates to false otherwise. Such predicate may be defined with the following clause:

min(X, Y, M) iff {[(X=<Y) AND (M=X)] OR [(X>Y) AND (M=Y)]}

Once this predicate is introduced in the knowledge base, min() will be recognized and able for use in other clauses.

Predicates are useful to allow simpler and more intuitive clauses in the knowledge base. For example consider the rule that "the value of B is equal to the value of A unless A is greater than 5, in which case the value of B is at most 5". Once the predicate min() has been created, this rule can simply be expressed by the clause:

min(A,5,B) which according to the definition of the predicate is the same rule, but in a more readable wording, that the equivalent clause

[(A=<5) AND (B=A)] OR [(A>5) AND (B=5)]

A special interesting type of predicate are the so called built-in predicates. These are predicates that are predefined and include the execution of certain procedures by the language interpreter. Such procedures may include operating on data (for example sorting a list) or executing other actions (for example input/output functions). Built-in predicates thus constitute a sort of compromise between logic and procedural programming. By combining these built-in predicates, more complex clauses and predicates may be created to perform more complex combinations of deductions and actions, and logic programming may be used to achieve more practical goals than mere formal deduction of facts. Also, in some systems, built-in predicates can be custom-created as a way to invoke procedures written in procedural languages, such as C, somehow expanding the possibilities of the language.

As an interesting example, it would be possible to build a predicate that verifies a cryptographic signature, i.e. takes as arguments all the elements required to verify a signature such as the public key, the signature and other mathematical public parameters and evaluates to true if the signature verifies and to false if the signature does not verify. As verifying a signature of a message typically involves computing a hash function over the message, it may be necessary to have another built-in predicate hash() predefined for the language interpreter. Should such a built-in predicate not be readily available, the language could be expanded by including it as a call to a function programmed in C. It would also be possible to have the complete procedure for signature verification as a built-in predicate.

Knowledge bases are exploited by performing queries on them. A query is a Boolean expression that poses a question on the relationships between objects and object properties. Queries are performed by the language interpreter. When a query include predicates in the expression, any procedures that the predicates involve are performed.

Queries will evaluate to true if the expression is a logical consequence of the clauses in that knowledge base, but sometimes the query being true will depend on the values taken by some variables that appear in the query expression. In this case the purpose of performing a query is to find values to substitute into the variables in the query such that the query is satisfied. This is similar to asking a question "what values will make my statement true". If such values are found then the query evaluates to true and the values are reported; if no values are found then the query will evaluate to false. For instance, one example of a query could be "Is Tom a domesticated animal?". According to the clauses above "Tom is a cat" and "cats are domesticated animals", the answer would be "true". Another example could be "Y=1?", which according to the clauses above "X=3", "X=Y" and "X+Y+Z=11" would be evaluated to "false". On the other hand, the query "Y=3?" would result in the output "Z=5" and evaluate to "true".

Facts, rules, predicates and queries are expressions that can be constructed using the syntax of any declarative language that follows the logic programming paradigm, such as Prolog, and the evaluation of queries would require an interpreter, for instance a Prolog interpreter. Each particular language will have its own syntax and laws, which may be different from the specific definitions provided herein, but the basic idea would be the same: Queries find results and execute procedures in a way logically consistent with the knowledge base, the knowledge base being a collection of mathematical expressions in the form of clauses and predicates.

Although interpreting a query might in some cases be a heavy task, in other cases this might be easy and straightforward, well within the possibilities of a low computing capacity device. This is the case for instance when all clauses are mathematical expressions that can be easily solved by simple allocation of values to all variables involved, as it happens in the query "Y=3?" in the example above.

## SUMMARY

According to the present disclosure, a more versatile, less expensive and easily managed alternative to the use of a classical PKI for message authentication can be achieved by coupling a particular combination of information originated at entities with different level of trust together with a novel use of cryptographic primitives adapted from Identity Based Cryptography.

The proposed way of combining the information originated at each entity with different level of trust assumes that at least part of that information is expressed with mathematical expressions in the form of clauses and/or predicates. A collection of such mathematical expressions is referred to as a knowledge base in the present disclosure. Knowledge bases may be expanded by adding additional clauses and/or predicates.

Further, the novel adaptation of the cryptographic primitives used in Identity Based Cryptography results from, instead of using an identity to generate public and private keys, using a knowledge base. This is possible since both identities and knowledge bases are specified by means of character strings, and the actual meaning of the string that is used is irrelevant for the purpose of executing the mathematical procedures involved in the cryptographic primitives.

According to the present disclosure, a knowledge base originated at a so-called guarantor entity may be expanded at a receiving entity by adding additional clauses and/or predicates. Some of these additional clauses and/or predicates may be originated at a message-composing entity and included in the content of the message, while other clauses and/or predicates may be known and available to the receiving entity. An expanded knowledge base is thus a collection of clauses and/or predicates that contains clauses and/or predicates originated at the guarantor entity, clauses and/or predicates originated at a message-composing entity, as well as other clauses and/or predicates available at the receiving entity.

According to the present disclosure, the clauses contained in the knowledge base originated at the guarantor entity cannot be modified without the receiving entity noticing the manipulation, even when the message-composing entity is fully compromised. Therefore, the knowledge base originated at the guarantor entity is referred to as a trusted knowledge base. This trusted knowledge base may be then expanded at the receiving entity. The expanded knowledge base possesses at least the same, or more information than the trusted knowledge base, at the cost that the trust that can be placed in it is somehow diminished, due to the fact that the new information that is added to it has been originated at entities other than the guarantor.

According to the present disclosure, a receiving entity is able to build an expanded knowledge base from clauses and/or predicates conveyed in the content of a received message and clauses and/or predicates otherwise available to the receiving entity, and is able to exploit the expanded knowledge base by performing queries, and is able to perform actions as some predicates are being evaluated in the course of performing the queries; and is able to make decisions and/or perform further actions depending on the results of the queries.

According to the present disclosure, the verification of a cryptographic signature may be expressed as a predicate, meaning that the predicate evaluates to true in case the signature is verified, and evaluates to false in case the signature verification fails.

A first aspect of the disclosure relates to a computer-implemented method for authenticating a message-composing entity, the method comprising:

- receiving a signed message comprising a trusted knowledge base, a signature and a content; wherein the signature is generable by using a private key generable by processing the trusted knowledge base together with a Master Key, the trusted knowledge base comprising one or more clauses and/or predicates; wherein the content includes zero, one or more clauses and/or predicates; and wherein a predicate is a collection of one or more clauses and procedures, a clause is an expression that relates one or more variables and values by means of operators and a procedure is a set of computable instructions;

- obtaining an expanded knowledge base, wherein the expanded knowledge base is obtained by adding zero, one or more clauses and/or predicates to the trusted knowledge base, wherein some of the added clauses and/or predicates may be obtained from the content;

- performing one or more queries over the expanded knowledge base; a query being a Boolean expression that poses a question on the relationships between variables and values by means of clauses and/or predicates; wherein at least one of the queries comprises a predicate that comprises a procedure for the verification of the signature; wherein the signature is verifiable with a public key generable by processing the trusted knowledge base;

- upon determining that the one or more queries evaluate to true, carrying out one or more resulting actions consistent with the results of the one or more queries and the content of the message.

Examples of operators are +, -, *,/,<, >, =, AND, OR, IF,IFF.

In some embodiments, the predicate that comprises a procedure for the verification of the signature may be a built-in predicate known and executable by the entity receiving the message. For example, a program designed to verify signatures may be stored in the entity receiving the message at the time of manufacturing, ready to be invoked as a subroutine whenever the procedure for the verification of the signature is run as the predicate that comprises it is evaluated.

In the present disclosure, the meaning of performing a query over a knowledge base refers to the evaluation of the Boolean expression that defines the query in order to determine whether the expression is true or false; wherein said evaluation also includes the determination of the values that any variable defined in the knowledge base may need to take to allow the expression to be true; wherein said evaluation also includes the execution of any procedure that the predicates invoked in the query may contain; wherein all evaluations, determinations and executions are to be achieved by means of suitable procedural and/or logic programming techniques, including deduction procedures, transformations, mathematical and logical computations, and other methods as the state-of-the-art of procedural and/or logic programming may include.

The one or more queries to be performed may be built-in and stored within the entity receiving the message, or may be included in the trusted knowledge base, or may be included in the content of the message, or may result of a combination of all the above within a logical expression in some way that is predefined and known to the receiving entity.

At the time of performing the query, the predicate that comprises a procedure for the verification of the signature is preferably invoked in first place, as this may help preventing some Man-in-the-middle or replay attacks performed by a bogus entity.

The above method allows an entity executing the method to authenticate the message-composing entity which has sent the signed message, in the sense that after executing the above method, the receiving entity becomes convinced of the legitimacy of the message-composing entity, in the sense that it is an entity actually authorized to send the signed message. The authentication of the message-composing entity is performed upon verification of the signature, and the signature is verified by means of a procedure that is included in a predicate that is included in at least one of the queries, so that the procedure is executed when performing the one or more queries, and the signature verification procedure is executed using a public key that is obtainable by processing the trusted knowledge base. As a result, the receiving entity can ignore or reject messages sent by bogus (fake or manipulated) message-composing entities.

The public key is obtainable by processing the trusted knowledge base, thereby enabling verification of the signature of a message containing the trusted knowledge base. The public key may be obtainable by applying operations to the trusted knowledge base or by using the trusted knowledge base to retrieve a public key from a memory (e.g. from a memory remote to an entity using the public key or from a local memory of the entity using the public key). This would be of particular use in case several messages with the same trusted knowledge base are received by the receiver entity, so that the public key need only be obtained when the first message arrives, in order to save the time required to process the trusted knowledge base to obtain the public key for later messages. The public key allows verifying that the message has been signed with the appropriate private key and, assuming that the private key is accessible only to the valid message-composing entity/entities, it allows verifying that the message has been signed by a valid message-composing entity. The fact that the public key can be obtained by applying operations to the trusted knowledge base implies that there is no need to store and/or update certificates associated to message-composing entities at the receiver entity.

As the performing of the one or more queries may involve the evaluation of several clauses and/or predicates, which may be related by logical operators, it may be the case that during the evaluation process the result of a query may at some point be deducted to be false, even if the complete query has not yet been evaluated. Advantageously, the evaluation of the rest of the query may not be needed, thus saving time and power. In particular, it may not be necessary to execute the procedure for the verification of the signature, if other conditions specified in previous clauses are found not to be met. Likewise, it might not be necessary to further evaluate some clauses in case that the signature verification fails.

Upon having evaluated the one or more queries to be true and having authenticated the message-composing entity (and, indirectly, the signed message), the receiving entity carries out one or more resulting actions consistent with the results of the one or more queries and the content of the message.

In certain embodiments, the predicate that comprises a procedure for the verification of the signature is a built-in predicate known and executable by the entity receiving the message.

That is, the receiving entity may already incorporate executable code stored in memory so as to evaluate the predicate for the verification of the signature. This way, this predicate that comprises a procedure for the verification of the signature does not need to be part of the trusted knowledge base. The receiving entity is thus instructed to verify the signature of the message upon receiving the message.

In certain embodiments the zero, one or more additional clauses and/or predicates that are added to the trusted knowledge base to obtain the expanded knowledge base relate to one or more values known or computable by an entity composing and signing the message, and/or one or more values known or computable by an entity receiving the message.

Performing and evaluating the one or more queries over the expanded knowledge base allows determining whether certain conditions are satisfied, for example, it is permitted to determine whether the message has been received at an allowable geographic location or whether the message has been received at an allowable time.

In some embodiments, the steps of the computer-implemented method for authenticating a message-composing entity are performed by at least one processor.

In the present disclosure the term "send" includes all "broadcast", "multicast" and "unicast" methods of sending.

Another aspect of the disclosure relates to a method for sending a message allowing authentication of a message-composing entity, the method comprising:

- receiving a private key generable by processing a trusted knowledge base together with a Master Key, the trusted knowledge base comprising one or more clauses and/or predicates; a predicate being a collection of one or more clauses and procedures; a clause being an expression that relates one or more variables and values by means of operators; a procedure being a set of computable instructions;

- composing a message comprising the trusted knowledge base and a content; wherein the content includes zero, one or more clauses and/or predicates;
- signing the message with the private key to obtain a signed message comprising a signature, and
- sending the signed message comprising the trusted knowledge base, the signature and the content, the signature of the sent message being verifiable with a public key, the public key being obtainable by processing the trusted knowledge base.

The private key is generable by processing the trusted knowledge base together with a Master Key. The processing guarantees that it is computationally infeasible to generate the private key from the trusted knowledge base in the absence of the Master Key. The Master Key never leaves the high-security level zone, thus ensuring minimum risk of abusing the Master Key to improperly obtain a private key.

In some embodiments, the generation of a private key by processing the trusted knowledge base and a Master Key is performed using an adaptation of an Identity Based Cryptography private key generation primitive. In this adaptation, the digital material that corresponds to the identity is substituted by a different digital material that corresponds to the trusted knowledge base.

In some embodiments, the receiving of the private key is achieved after a secure communication channel is established between the guarantor entity that generates the private key and the message-composing entity that receives the private key. A secure communication channel between two entities is understood as the establishment of a means to allow encrypted communication between the two entities, upon both entities having mutually authenticated each other before any information is sent.

The generated private key is sent to a message-composing entity which will be in charge of signing messages. Different private keys, corresponding to different trusted knowledge bases, can be generated and sent to a message-composing entity over time. The risk associated to the lower security of the layer where the message-composing entity is located may be mitigated by regularly updating the private keys and making these private keys expire often, so their eventual compromise would have limited security consequences.

In some embodiments, all the steps of the computer-implemented method for sending a message are performed by at least one processor.

In some embodiments, the current time may be a variable that is included in one or more clauses and/or predicates. The value of the current time is obtainable by an entity in possession of a clock by consulting the clock at the time a query is performed over a knowledge base. This can be used for the purpose of comparing the current time with one or more other time values specified within a clause and/or predicate, or with the current time at the time of message composition, thus making possible the use of some definitions of elapsed time as variables within rules and/or predicates included in a knowledge base. Rules and/or predicates containing an elapsed time as a variable are useful to defeat some instances of Man-In-The-Middle attacks.

In some embodiments, the current geographic location of an entity may be a variable that is included in one or more clauses and/or predicates. The value of the current geographic location is obtainable by an entity in possession of some adequate device that provides geo-localization such as a GNSS receiver, by consulting this device at the time a query is performed over a knowledge base. This can be used for the purpose of comparing the current geographic location with one or more other geographic location values specified within a clause and/or predicate thus making possible the use of some definitions of distance as variables within rules and/or predicates included in a knowledge base. Rules and/or predicates containing distances as variables are useful to defeat some instances of displacement attacks.

In the context of the present disclosure, a geographic location is to be understood as any of a geographic location, a set of geographic locations, a geographic area and/or a set of geographic areas.

In some embodiments, the virtual address of an entity in a communication network may be a variable that is included in one or more clauses and/or predicates. This can be used for the purpose of comparing the virtual address of an entity with one or more predefined virtual addresses, or with one or more network locations specified within a clause and/or predicate.

Examples of virtual addresses are an IP address or a MAC address.

In the context of the present disclosure, a network location is to be understood as a profile that includes a collection of network and sharing settings that get applied to the network and/or subnetwork an entity is physically and/or logically connected to.

In some embodiments, the message comprises a nonce. The nonce is a single-use value and may be a pseudorandom value, e.g. a pseudorandom number. A purpose of the nonce is indicating the freshness of the message. The presence of a nonce in the message enables increasing protection against attacks in which an attacking party intercepts the sent message and sends a message containing at least the portion of the message containing the nonce. In this particular attack, a receiving entity receives two messages with the same nonce, making it possible for the receiver to detect an anomaly.

In some embodiments, the private key is generable by using public domain parameters in addition to the Master Key and the trusted knowledge base, and/or wherein verifying the signature with the public key uses said public domain parameters. In the present disclosure, the qualifier "public domain" refers to being publicly available and to the fact that such public availability does not pose a security risk, and is used as opposed to "private".

Since the public domain parameters are publicly available, easy access to the domain parameters required to generate the private key and/or to verify the signature is allowed.

Some examples of public domain parameters are coefficients defining an elliptic curve, the characteristic of an elliptic curve, a point in an elliptic curve, the order of a point in an elliptic curve.

In some embodiments, the public domain parameters comprise a public deterministic function. In the context of the present disclosure, a public deterministic function is to be understood as a public function which always assigns the same output to an input.

In some embodiments, the public deterministic function is a hash function. A hash function is a function that takes an input of any arbitrary size and provides an output of a predetermined size, called a digest, and that possesses certain properties that are interesting in the context of cryptography.

In some embodiments, the public key is obtainable by applying the public deterministic function to the trusted knowledge base, thus enabling verification of signatures without the need of a digital certificate.

In some embodiments, the processing of the trusted knowledge base and the Master Key using public domain parameters to generate the private key may involve a first step in which the public key is obtained by applying the public deterministic function to the trusted knowledge base, and a second step in which the private key is obtained by processing the public key and the Master key using public domain parameters.

In some embodiments, the second step in which the private key is obtained by processing the public key and the Master key using public domain parameters may involve a mathematical procedure based on the mathematical properties of bilinear pairings and/or other primitives from pairing based cryptography.

In some embodiments, the message comprises an identifier of a first entity generator of the private key, also referred to as a guarantor entity; some or all of the public domain parameters being associated to the first entity; the method for authenticating a message-composing entity comprising retrieving the public domain parameters by using the identifier of the first entity. Thereby, the public domain parameters associated to the first entity are retrievable by using the identifier of the first entity. These embodiments enable retrieval of public domain parameters associated to different first entities by merely using the identifier of each of the first entities.

Another aspect of the disclosure relates to an entity for authenticating a message-composing entity, the entity comprising:

- means for receiving a signed message comprising a trusted knowledge base, a signature and a content; wherein the signature is generable by using a private key generable by processing the trusted knowledge base together with a Master Key, the trusted knowledge base comprising one or more clauses and/or predicates; wherein the content includes zero, one or more clauses and/or predicates; a predicate being a collection of one or more clauses and procedures; a clause being an expression that relates one or more variables and values by means of operators; a procedure being a set of computable instructions;
- processing means configured for

  • obtaining an expanded knowledge base, wherein the expanded knowledge base is obtained by adding zero, one or more clauses and/or predicates to the trusted knowledge base, wherein some of the added clauses and/or predicates may be obtained from the content;
  • performing one or more queries over the expanded knowledge base; a query being a Boolean expression that poses a question on the relationships between variables and values by means of clauses and/or predicates ; wherein at least one of the queries comprises a predicate that comprises a procedure for the verification of the signature; wherein the signature is verifiable with a public key generable by processing the trusted knowledge base;

- and upon determining that the one or more queries evaluate to true, the processing means are configured for carrying out one or more resulting actions consistent with the results of the one or more queries and the content of the message.

Another aspect of the disclosure relates to a message-composing entity for sending a message allowing authentication of the message-composing entity, the entity comprising:

- means for receiving a private key generable by processing a trusted knowledge base together with a Master Key, the trusted knowledge base comprising one or more clauses and/or predicates; a predicate being a collection of one or more clauses and procedures; a clause being an expression that relates one or more variables and values by means of operators; a procedure being a set of computable instructions;
- means for composing a message comprising the trusted knowledge base and a content; wherein the content includes zero, one or more clauses and/or predicates;
- means for signing the message with the private key to obtain a signed message comprising a signature, and
- means for sending the signed message comprising the trusted knowledge base, the signature and the content, the signature of the sent message being verifiable with a public key, the public key being obtainable by processing the trusted knowledge base.

The disclosure also relates to a system for authenticating a message-composing entity, comprising:

- a message-composing entity for sending a message allowing authentication of the message-composing entity, the message-composing entity comprising means for carrying out the method related to an aspect of the present disclosure as defined in the foregoing; and
- a second entity for authenticating the message-composing entity, the second entity comprising means for carrying out the method related to the first aspect of the disclosure.

Another aspect of the disclosure relates to a system for authenticating a message-composing entity, comprising a message-composing entity and an entity for authenticating a message-composing entity as defined in the foregoing.
The present disclosure also relates to a method for authenticating a message-composing entity, the method comprising:

- a first computer-implemented method performed by a first entity, the first computer-implemented method comprising generating a private key by processing a trusted knowledge base together with a Master Key, the trusted knowledge base comprising one or more clauses and/or predicates;
- a second computer-implemented method performed by the message-composing entity, the second computer-implemented method comprising:

    ▪ receiving the private key;
    ▪ receiving the trusted knowledge base;
    ▪ composing a message comprising the trusted knowledge base and a content;
    ▪ signing the message with the private key to obtain a signed message comprising a signature, and
    ▪ sending the signed message comprising the predicate, the signature and the content; and

- a third computer-implemented method performed by an entity for authenticating a message-composing entity, the third computer-implemented method comprising:

    ▪ receiving the signed message;
    ▪ obtaining an expanded knowledge base by adding zero, one or more clauses and/or predicates to the trusted knowledge base, wherein some of the added clauses and/or predicates may be obtained from the content;
    ▪ performing one or more queries over the expanded knowledge base; wherein at least one of the queries comprises a predicate that comprises a procedure for the verification of the signature; wherein the signature is verifiable with a public key generable by processing the trusted knowledge base; and
    ▪ upon determining that the one or more queries evaluate to true, carrying out one or more resulting actions consistent with the results of the one or more queries and the content of the message.

The different aspects and embodiments defined in the foregoing may be combined with one another, as long as they are compatible with each other.
Additional advantages and features of the present disclosure will become apparent from the detail description that follows and will be particularly pointed out in the appended claims.

**BRIEF DESCRIPTION OF THE DRAWINGS**

To complete the description and in order to provide for a better understanding of the present disclosure, a set of drawings is provided. Said drawings form an integral part of the description and illustrate one or more embodiments, which should not be interpreted as restricting the scope of the disclosure, but just as an example of how the present disclosure can be carried out. The drawings comprise the following figures:

Figure 1 diagrammatically shows a method for sending a signed message.

Figure 2 and Figure 3 diagrammatically show a message-composing entity for sending a signed message, and an entity for authenticating the message-composing entity, respectively.

Figure 4 diagrammatically shows a method for authenticating the message-composing entity.

Figures 5 and 6 diagrammatically show an entity and a method, respectively, for generating a private key.

Figure 7A diagrammatically shows an example of application in a vehicular network.

Figure 7B shows an example of a message.

Figure 8A and 8B diagrammatically show the flow of information between a guarantor entity, a message-composing entity and a receiving entity.

Figure 9 diagrammatically shows an example of application for a retail scenario.

Figure 10 diagrammatically shows an example of application for wireless sensor networks.

## DESCRIPTION OF PREFERRED EMBODIMENTS

The present disclosure relates to a method of authenticating messages as well as message-composing entities deployed within an Internet of Things (IoT) network. It also relates to a scheme for securely conveying information between entities in an IoT network and dynamically controlling their behavior in a secure way at the same time as authentication is achieved.

According to the present disclosure, a more versatile, resourceful and convenient alternative to the use of a classical PKI for message authentication can be achieved by the combination of logic programming with a novel use of cryptographic primitives adapted from Identity Based Cryptography.

The information originated at different entities within the network is conveyed in the form of mathematical expressions, making up clauses and predicates in accordance with the paradigm of logic programming. A collection of clauses and predicates either embedded in messages or known to the entity receiving the message are considered as a knowledge base, upon which queries may be performed. As queries are performed, information with various levels of confidence may be extracted and verified. In this context signature verification is achievable by means of built-in predicates, providing for both the authentication of a message and a message-composing entity. Upon signature verification, results of queries may be used to control the behavior of an entity receiving a message.

The novel adaptation of the cryptographic primitives used in Identity Based Cryptography results from using a knowledge base to generate public and private keys, instead of using an identity, so that the knowledge base becomes securely linked to the public and private keys.

The following description is not to be taken in a limiting sense but is given solely for the purpose of describing the broad principles of the present disclosure. Embodiments thereof will be described by way of example, with reference to the above-mentioned drawings.

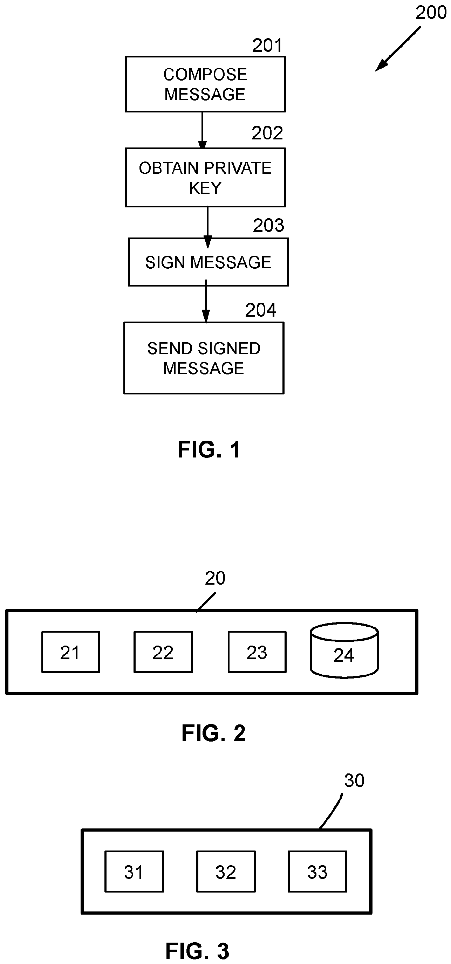

Figure 1 diagrammatically shows a method 200 for sending a message allowing authentication of a message-composing entity. In the method 200, a message is composed by a message-composing entity 20, which is schematically shown in Figure 2. The message comprises a trusted knowledge base. The message is signed with a private key to obtain a signed message comprising a signature. The signed message is sent.

In a general manner, the message-composing entity 20 is an entity having at least:

- a processor 21 (also generally referred to as processing means); and,
- a memory 22 for storing instructions and data. The instructions can be in the form of a computer program code, so that a method for sending a signed message according to the present disclosure is carried out upon execution by the processor 21. The data stored in the memory can relate to the message-composing entity 20 itself and/or data related to the message such as the trusted knowledge base and/or a content of the message.

The message-composing entity 20 also has a communications module 23, so that the message-composing entity 20 can be communicatively coupled with other entities, such as one or more entities 30 which will receive the signed message, for authenticating the message-composing entity. The communications module 23 also enables secure communication with an entity 10 generating the private key, so that the private key can be received by the message-composing entity 20.

The message-composing entity 20 also has a secure storage 24 where the private key can be securely stored after it is received, and from which it can be retrieved in order to sign messages.

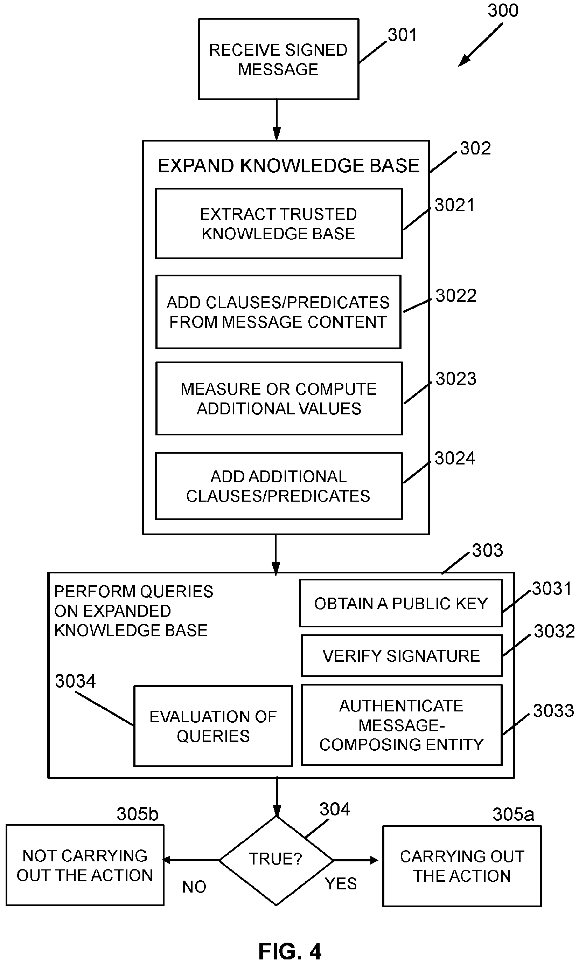

The message-composing entity 20 is configured for composing a message including a trusted knowledge base, and for signing the message with a private key to obtain a signed message comprising a signature. The message-composing entity 20 is also configured for sending the signed message via the communications module. The signed message enables authentication of the message-composing entity 20 by the entity 30 receiving the signed message by performing queries on an extended knowledge base (which will be introduced in relation to Fig. 4), at least one of the queries involving the verification of the signature.

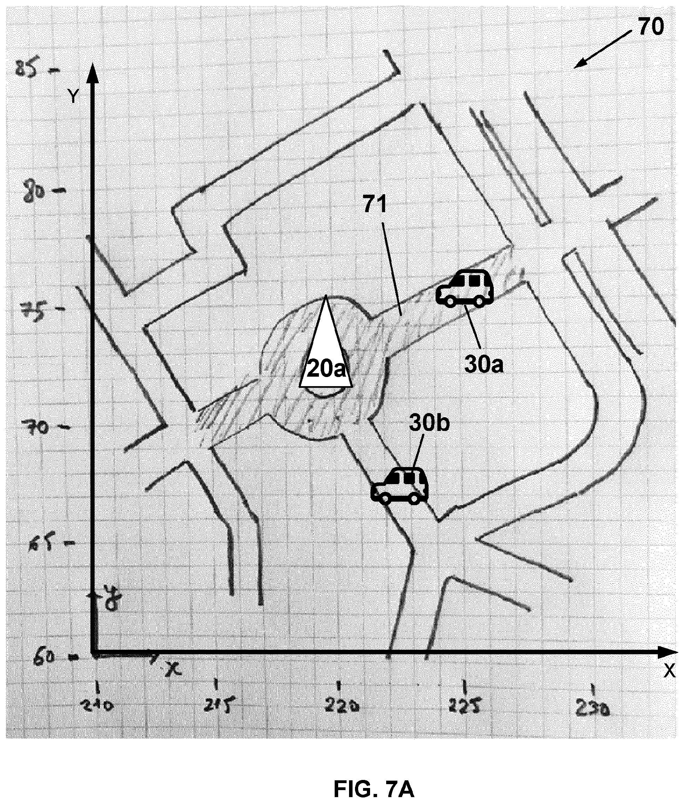

In a possible implementation, the message-composing entity 20 is for example a beacon 20a (as shown in Fig. 7A) and the entity receiving the signed message is a vehicle 30a or a vehicle 30b passing near the beacon 20a.

In a general manner, the entity 30 configured for receiving a signed message sent by the message-composing entity 20 is an entity having at least:

- a processor 31 (also generally referred to as processing means); and
- a memory 32 for storing instructions and data. The instructions can be in the form of a computer program code, so that a method for authenticating a message-composing entity according to the present disclosure is carried out upon execution by the processor 31. The data stored in the memory 32 can relate to the entity 30 itself and/or public domain parameters and/or data of the signed messages received in the past.

The entity 30 also has a communications module 33, so that the entity 30 can be communicatively coupled with other entities, such as the message-composing entity 20 for receiving the signed message and/or the at least one memory 32.

Figure 4 diagrammatically shows a method 300 for authenticating a message-composing entity. In the method 300, the signed message is received at the entity 30. The message-composing entity is authenticated by performing queries over the extended knowledge base, in the course of which a procedure for verifying the signature of the message is executed.

In the method 200, a message is composed (step 201) by the message-composing entity 20, the message includes a trusted knowledge base and some contents. A private key is obtained from a secure storage (step 202). The message is then signed using the private key (step 203), and the signed message is sent (step 204). In this particular example, the private key has been received at a previous time from a guarantor entity 10 and has been stored at that previous time in the secure storage 24. It would also be possible that the private key be received immediately before the message is composed.

In the method 300, the signed message sent -including the trusted knowledge base, the signature and some contents- is received (step 301) at the entity 30 via the communications module 33.

Next the trusted knowledge base is obtained and expanded (step 302) by the processor 31 as follows: First the trusted knowledge base is extracted from the message (step 3021); then the content of the message is searched for additional clauses and/or predicates, which are added to the trusted knowledge base (step 3022); then relevant values that are known to the receiving entity 30 - such as current time or current location of the entity- are computed by the processor 31 or extracted from memory 32 (step 3023), and clauses containing those values are further added to the knowledge base (step 3024), resulting in the expanded knowledge base which is stored in memory 32.

Over the expanded knowledge base one or more queries may be performed as decided by the receiving entity (step 303); these queries are processed by the processor 31 in order to determine whether they evaluate to "true" or "false".

Since at least one of the predicates in the expanded knowledge base contains a procedure to verify the signature, signature verification is performed when that procedure is executed by the processor 31. The procedure encompasses two steps.

In a first step of the procedure the public key is obtained (step 3031), either by processing the trusted knowledge base or by extracting it from memory 32. The processing to obtain the public key may use public domain parameters, such as the public deterministic function SHA-256 to be applied to the trusted knowledge base. The obtaining of the public domain parameters and the public key from memory may be achieved by using an identifier of an entity which generated the private key, such as the optional entity 1.

In a second step of the procedure the signature is verified using the public key (step 3032), and if the verification succeeds then the message-composing entity is authenticated (step 3033), and the predicate containing the signature verification procedure returns "true", otherwise returning "false".

As the query or queries are performed, the Boolean result of the predicate containing the procedure for signature verification is taken into account together with the results of all other clauses and predicates as processed by the processor 31 to obtain the resulting evaluation (step 3034) that returns a Boolean value either "true" or "false". This value is then used (step 304) to decide whether or not to carry out the action (step 305a, step 305b).

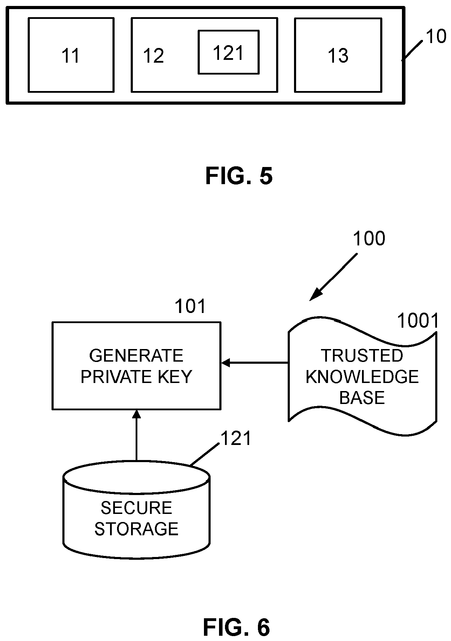

Figure 6 diagrammatically shows a method for generating the private key. This method 100 is performed by a guarantor entity 10. In a general manner (as schematically shown in Figure 5), the guarantor entity 10 is an entity having at least:

- a processor 11 (also generally referred to as processing means); and.
- a memory 12 for storing instructions and data. The instructions can be in the form of a computer program code, so that a method according to the present disclosure is carried out upon execution by the processor 11. The data stored in the memory 12 can relate to the generation of the private key, such as a Master Key or public domain parameters.
- The memory 12 comprises a secure storage 121 where the Master Key can be securely stored, and from which it can be retrieved to generate a private key.

The entity 10 also has a communications module 13 so that the entity 10 can be communicatively coupled with other entities such as the message-composing entity 20 and/or with the memory 12 and/or with the secure storage 121.

In the method 100 the private key is generated 101 based on the trusted knowledge base 1001 and using a Master Key obtained from the secure storage 121. The private key may be obtained using public domain parameters. For example, a public deterministic function, e.g. SHA-256, may be applied to the trusted knowledge base, thereby obtaining an intermediate value; the intermediate value may be equal to the public key corresponding to the trusted knowledge base 1001. A Master Key may be applied to the intermediate value, thereby obtaining the private key. The Master Key is not publicly available, enabling that only the devices capable of accessing the Master Key can generate a valid private key.

In the following, an example of application in a vehicular ad hoc network (VANET) is described (cf. Fig. 7A). This example applies to a geographical zone 70, within which the speed limit is to be restricted on a street area 71 where there are several educational centers in such a way that from Monday to Friday, from 8:30 AM to 9:30 AM and from 3:30 PM to 4:30 PM, the limit speed is set in that area to 10 km/h instead of 30 km/h. The target street area 71 for the speed limitation is represented by the shadowed area of Fig. 7A.

For this purpose, an information beacon 20a is placed by in the center of a roundabout in the target street area 71. This beacon 20a is configured to issue messages at certain times to inform vehicles in the area about the new speed limit. When a vehicle circulating in the geographical zone 70 is within coverage of the beacon 20a, such as vehicles 30a and 30b, both vehicles 30a and 30b receive the message if passing by within the time range defined in the beacon. As explained below, the message's content refers to the speed limit so both vehicles perform a query for the speed limit and, if the query returns true, the information of the change of speed limit is displayed to the driver, for example, through a notification on the dashboard or, in the case of an autonomous vehicle, to reduce the speed to 30 km/h if the vehicle is moving faster than that.

Mathematically, the target street area 71 including the street and roundabout subject to the temporal speed limitation are defined as the set of points on the map that satisfy the following condition expressed as a predicate P1 named inArea():

$$inArea\,(x,y)\;IFF\;\Big[\big((72 < x - 2y < 77)AND(214 < x < 228)\big)OR(x^2 + y^2 - 439x - 144y + 53354 < 0)\Big] \hspace{2cm} \text{[P1]}$$

where:

- "x" and "y" are variables of the geographic location of the vehicle 30a;
- "72", "77", "214" and "228" are predefined values of the predicate; and "IFF", "AND" and "OR" are logical operators.

The predicate inArea(x,y) is defined so as to return true in case the vehicle is located within the area where the speed is restricted.

Another predicate P2 for defining the time window when the speed limitation is applicable can be expressed as:

$$inTime(T)\;IFF\;\Big[(weekday(T) = WorkingDay)\;AND\;\big((8\!:\!30 \le hour24(T) \le 9\!:\!30)\;OR\;(15\!:\!30 \le hour24(T) \le 16\!:\!30)\big)\Big] \hspace{1cm} \text{[P2]}$$

where;

- 'T' is the time of evaluation of the query (date + time of day - format yyyymmdd hh:mm:ss); and
- 'WorkingDay', 'weekday' and 'hour24' are built-in predicates that the vehicle is capable of evaluating given a time value.

The predicate inTime(T) P2 is defined so as to return true in case the current time when the query is performed is within the pre-established time window of speed limit applicability.

In the present example a third predicate P3 can be conveniently defined to instruct the vehicle to apply a speed limit in case the limitation is applicable:

$$speedLimit(MAX\_SPEED) \ IFF \ inArea(x,y) \ AND \ inTime(T) \qquad \textbf{[P3]}$$

In the present example, another predicate can be included in the trusted knowledge base regarding the validity of the signature, so that the signature is only valid during February 2022. This can be defined in a fourth predicate P4 as:

$$validKey(T) \ IFF \ [(20220201 \ 00:00:01 \le \{T\} \le 20220228 \ 23:59:59)] \qquad \textbf{[P4]}$$

where:

- "T" is a variable indicating a current date and time, such as 20220222 02:22:20; and,

- "20220201 00:00:01" and "20220228 23:59:59" are predefined values of the clause, and more in particular are timestamps used for defining a time range.

The use of P4 in this way can be interpreted as having the private key expire at the end of February. Beginning March 1st it would be possible to change the predicate P4 to have a new predicate applicable for March. This will result in updated values for both public and private keys (since the trusted knowledge base is changed so are the keys), while the logic conveyed within predicates P1, P2 and P3 is maintained.

In the present example, the names of the variables "x", "y" and "T" referring to the geographical position of the vehicle and the current time have been previously agreed so that those names will be recognized by the receiving entity.

In the present example, a fifth predicate P5 is pre-defined and stored at the receiving entity to provide for verification of the signature. This predicate named 'signatureVerifies' comprises a procedure for the verification of signatures, which is built into the system so that it may be executed by the receiving entities 30a and 30b:

$$signatureVerifies(guarantorId) \qquad \textbf{[P5]}$$

where 'guarantorId' is an identifier of the entity that communicates the trusted knowledge base and the private key to the beacon.

In the present example, the predicate allows for a null content of the identifier 'guarantorId' just in case there is only one guarantorId known to the beacon, in which case the content of the message does not need to include it and the known one will be used. Should more than one guarantorId be stored at the beacon and the content not include one, the predicate may be programmed to evaluate to false or, in case the number of stored guarantorId's is reduced, to verify the signature using all of them to see if anyone would make the signature verify.

As the predicate P5 is built into the receiving entities, it does not need to be part of the trusted knowledge base; the receiving entity already incorporates executable code stored in memory so as to evaluate the predicate P5. Furthermore the receiving entity is instructed so as to verify the signature of the message when the message is received.

In the present example, the procedure to be executed by the receiving entities when the predicate P5 'signatureVerifies' is performed comprises the following steps:

- Extracting the identifier 'guarantorId' from the content of the message;
- Using the identifier 'guarantorId' in order to retrieve public domain parameters from the memory storage;
- Extracting the trusted knowledge base from the message;
- Using the public deterministic function defined within the public domain parameters, which is this example is a hash function SHA256(), in order to obtain a digest of the trusted knowledge base;

- Using that digest as input to a public_key_determination cryptographic primitive, said primitive being identified in the public domain parameters, to obtain a public key;
- Verifying the signature from the message using the public key with a signature_verification cryptographic primitive, said primitive being identified in the public domain parameters; and
- Returning true in case the signature is successfully verified, else returning false.

The trusted knowledge base in this example is comprised by P1, P2, P3 and P4. A private key is generable by processing this trusted knowledge base.

The beacon 20a, which has previously received the trusted knowledge base and the private key, composes a message. This message includes the trusted knowledge base and a content. The content includes the identifier 'guarantorId' corresponding to the guarantor that provides the beacon with the private key and the trusted knowledge base.

Additionally the content specifies that the message relates to a speed limit type, as per the predicate speedLimit() and a clause C1 stating the speed limit, and may include other elements such as a nonce, a characteristic of the message-composing entity, a virtual address and/or a counter of messages.

In this case, the clause C1 includes data for limiting the maximum speed:

$$MAX\_SPEED=30 \qquad [C1]$$

where:

- "MAX_SPEED" is a variable; and
- "30" is a value assigned to the variable "MAX_SPEED".

The message is signed using the private key only known to the beacon 20a. This private key is generated by the guarantor entity 10 by processing the trusted knowledge base with the Master Key, and sent from the guarantor entity 10 to the beacon 20a at an earlier time.

The message may also be tagged for easier parsing and interpretation by the processing means of the vehicles 30a and 30b, which are the receiving entities, for instance using well known XML technology. The message in this example could look like the following:

```
<trustedKnowledgeBase>

<P1>
```

$$inArea\ (x, y)\ IFF\ \left[\left((72 < x - 2y < 77) AND (214 < x < 228)\right) OR (x^2 + y^2 - 439x - 144y + 53354 < 0)\right] </P1>$$

```
<P2>
```

$$inTime(T)\ IFF\ \left[(weekday(T) = WorkingDay)\ AND\ \left((8:30 \leq hour24(T) \leq 9:30)\ OR\ (15:30 \leq hour24(T) \leq 16:30)\right)\right]\ </P2>$$

```
<P3>
```

$$speedLimit(MAX\_SPEED)\ IFF\ inArea(x, y)\ AND\ inTime(T)\ </P3>$$

```
<P4>
```

*validKey*(T) IFF [(20220201 00:00:01 ≤ {T} ≤ 20220228 23:59:59)]</P4>

```
</ trustedKnowledgeBase >

<content>

<type> speedLimit (Limit) </type>

<addClause>

MAX_SPEED=30

</addClause>

<guarantorId>

G1234 </guarantorId>

<nonce>

3457347687658671 </nonce>

</content>
```

where:

- Type refers to the predicate that needs to be queried since the message is to convey a speed limit;
- addClause refers to additional clauses that the receiving entity is instructed to add to the trusted knowledge base;
- G1234 is an example of a 'guarantorId', known to the vehicle acting as receiving entity; and
- 3457347687658671 is a nonce, i.e. a value that is unique per message and that may be used to discard messages in case they may be resent by a bogus entity.

In this message the trusted knowledge base has been conveyed from the guarantor entity with identifier G1234, while the content has been specified by the beacon 20a. The beacon might have the speed limit of 30 km/h stored internally or might have received it at an earlier time from some external source.

In order for the beacon 20a to sign this message, a signature algorithm is applied to the XML above, i.e. to the concatenation of the trusted knowledge base and the content. A signature algorithm typically consists of two steps. First a public deterministic function, which in the present example is a hash function, is applied to the message to obtain a digest. Then a signature primitive is applied using this digest and the private key.

An example of a resulting signature obtained using the above examples of trusted knowledge base and content of the message, an appropriate private key and an appropriate signature algorithm, could be:
987BD166BC5947779A79514B5832A965327C27915462A58BD621 **[S]**

After the signature is obtained, the beacon appends (i.e. concatenates) the following signature field to the message

```
<signature>
987BD166BC5947779A79514B5832A965327C27915462A58BD621
</signature>
```

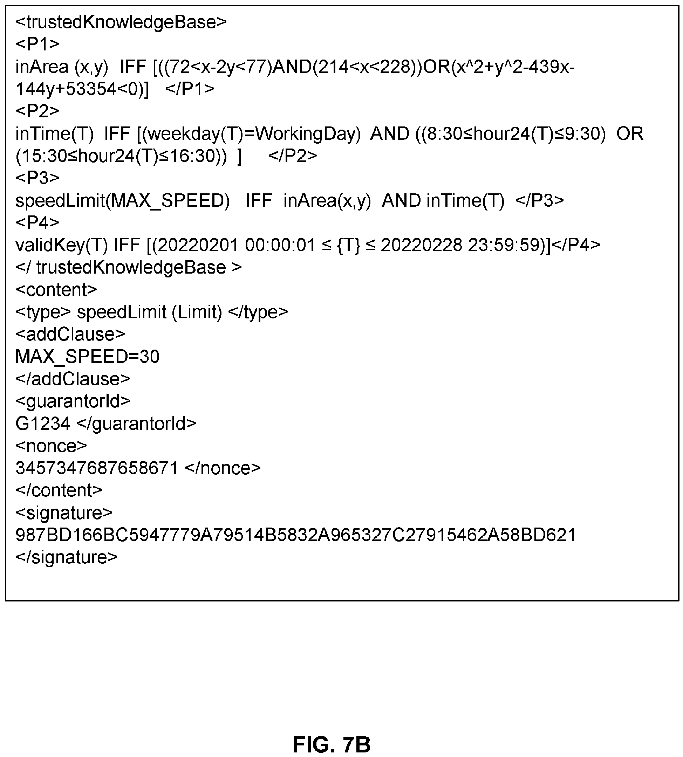

For the avoidance of doubt, the signature is computed over the XML text that includes everything in the message except the signature. Then the signature field is appended at the end. The result is a signed message (cf. Fig. 7B).

Next the signed message is sent (step 204) via the communications module 23. In the present example, the message is radio-broadcasted using frequency, format and other characteristics known to the vehicles, with a power enough to guarantee that the signal effectively reaches any vehicle within the shadowed area in Fig. 7A.

In the example shown, both vehicle 30a and 30b represented in Fig. 7A to be within the communications range of the beacon 20a receive and parse the signed message. Both vehicles 30a, 30b have a processor, both can access their position (x,y) using a GPS receiver and both can obtain the current time T with an internal clock. According to Fig 7A, the position of vehicle 30a is x=225, y=75 and meets the geographical restriction for a speed limitation. The position of vehicle 30b is x=222 and y=68 and does not meet the geographical restriction for the speed limitation.

In this example both vehicles proceed as follows:

First the vehicles obtain the values of x,y,T, from their GNSS receivers and their clocks;

Next they expand the knowledge base, which in the present example they do in three steps.

- In a first step they obtain C1 from the message and add it to the knowledge base;
- In a second step they obtain the 'guarantorId';
- In a third step clauses for the values of x,y,T, and 'guarantorId' are added. For example, in case of vehicle 30a the following three clauses are added:

> x=225
> y=75
> T = 20220213 09:00:00 (this assumes the message is received at 9 am Feb 13th) guarantorId=G1234

At this time both vehicles have their expanded knowledge base. In the case of vehicle 30a the expanded knowledge base will look like the following:

```
inArea (x,y) IFF [((72<x-2y<77)AND(214<x<228))C>R(x^2+y^2-439x-144y+53354<0)].
inTime(T) IFF [(weekday(T)=WorkingDay) AND ((8:30≤hour24(T)≤9:30) OR
(15:30≤hour24(T)≤16:30)) ].
speedLimit(MAX SPEED) IFF inArea(x,y) AND inTime(T).
validKey(T) IFF [(20220201 00:00:01 ≤ {T} ≤ 20220228 23:59:59)].
MAX_SPEED=30.
x=225.
y=75.
T = 20220213 09:00:00.
guarantorId=G1234.
```

While in the case of vehicle 30b the clauses for x and y will be different, namely:

> x=222
> y=68

Once the expanded knowledge base is completed the vehicles perform the query.

In this example the vehicles are instructed to compose one query to be performed by concatenating the query included in the content of the message after a predefined string "signatureVerifies(guarantorId) AND validKey(T) AND". Therefore the query looks as follows:

?- signatureVerifies(guarantorId) AND validKey(T) AND speedLimit(Limit) where:

- signatureVerifies(guarantorId) is a bult-in predicate, known and stored at the vehicle and that the vehicle is always programmed to perform;
- validKey(T) is a predicate the vehicle is instructed to include in the query in order to ensure that the private key has not expired; and
- speedLimit(Limit) is a query obtained from the type in the content of the message, that informs that the message relates to a speedLimit.

The process of evaluating the query would be as follows:
First the predicate signatureVerifies(guarantorId) is evaluated in order to authenticate the message. In case it evaluates to false the message would not be authenticated, thus the beacon is not authenticated. Since the verification fails, the level of trust on the message and on the beacon 20a is not enough to perform the action. The evaluation to false implies that the complete query will automatically evaluate to false (due to the presence of the AND operators), and no further actions are taken. In that case the rest of the predicates within the query need not be evaluated, saving processing capacity and power.

Assuming signatureVerifies(guarantorId) has evaluated to true, next the predicate validKey(T) is evaluated. In this example it is found to be true; in case T had corresponded to a later date for instance in March, the predicate would evaluate to false, meaning that the query will evaluate to false no matter what (because of the AND operators), so no further action would be taken.

In case both previous predicates have evaluated to true, the result of the query will depend on the evaluation of the predicate speedLimit(Limit):

- In the case of vehicle 30a the predicate evaluates to true, since it is possible to have speedLimit(Limit) true, provided that Limit=30. Consequently, the value Limit=30 also results of the evaluation.

- In the case of vehicle 30a the query evaluates to false, so no action is taken.

In the case of vehicle 30a, the processing means evaluates the query to true and Limit to 30; therefore vehicle 30a takes an action that might consist for example in limiting the maximum speed to a speed corresponding to 30 km/h or displaying a signal informing the driver about the speed limit being 30 km/h.

Many other cases are possible that are not further discussed. For instance, in case the current time at the time of consulting the clock would have been for example 10 am, then the predicate inTime(T) would have evaluated to false, so speedLimit(Limit) would evaluate to false due to predicate P3 and no action would have been taken by either vehicle.

As illustration of the utility of this example of application, suppose a rogue person decides to steal the beacon 20a and locate it in a new location (a displacement attack) in order to have cars passing that location reduce their speed. As long as the trusted knowledge base is not modified, the location the beacon is irrelevant to the vehicle so the attack will not succeed. On the other hand, if the attacker modifies the content of the trusted knowledge base, the signature will not verify and the attack would not succeed either.

On the other hand, if the attacker is able to fully compromise the beacon, then only the maximum speed can be changed. In the example, that information is the relevant piece of information that the guarantor leaves for the beacon to decide, as in this example the designers decided (for whatever reason) that the information about the location of the vehicle is more important and needs to be more secured than the information of the speed limit. This decision might have been taken, for example, because the vehicles never allow to increase the speed limit beyond some maximum, so the compromise of the beacon might only result in further reduction of the speed limit, a risk that is considered acceptable in case of beacon manipulation.

Finally, in case that the information in the trusted knowledge base would need to be modified by the guarantor, a new private key would be sent to the beacon, which could include a clause invalidating all cases in which the private key is older, by means of a predicate similar to P4.

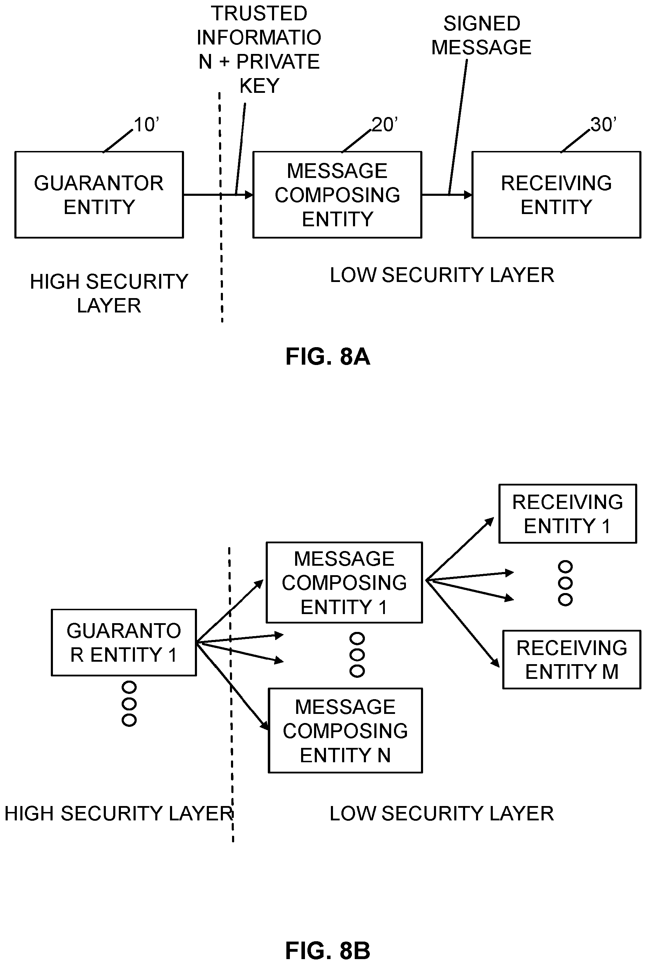

In the previous example related to a VANET, the network would comprise several guarantor entities 10', all of them located in a high-security layer to enforce security, each one of them being able to communicate to several beacons that act as message-composing entities 20', each beacon being able to transmit several messages that may be received by any number of vehicles that take the role of receiving entities 30' (see Fig. 8A and 8B). As vehicles circulate, they may encounter several beacons and react according to the messages received from them.

In the following, two more examples are presented. The examples are discussed with much less detail, since the basics have already been exhaustively covered in the VANET example, so these two additional examples are presented just to illustrate the utility of the disclosure in other scenarios. The first example relates to the application of the disclosure in a retail environment. The second example relates to the application of the disclosure in a Wireless Sensor Network.

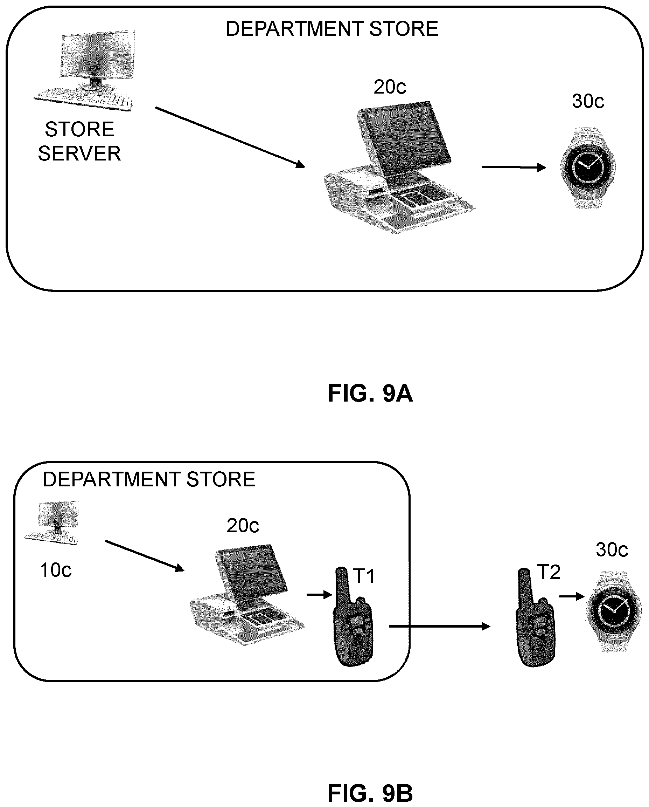

Next the application in a retail environment is presented (cf. Fig. 9a). The example applies to an electronic payment system scenario deployed in a Department Store. The store is equipped with a number of Point of Sale (POS) devices 20c, which are connected to a Store Server. In this particular store, payments may be conveniently made by a customer in possession of a smartwatch 30c by the simple means of positioning the smartwatch 30c close to one of the POS devices in the store when the transaction is carried out. According to this payment method, whenever a smartwatch and a POS are in the vicinity, a communication is automatically started between both devices, for instance using BLE (Bluetooth Low Energy). In this communication a message is sent from the POS to the smartwatch, containing the amount to be paid and a signature so that the smartwatch may properly authenticate the POS. The smartwatch has been previously preconfigured so as to trust the POSs of that particular store. Once the POS is authenticated the smartwatch charges the payment to a customer account. In this trivial system the smartwatch only receives one message from the POS and does not need to send any message to the POS, thus saving power for the smartwatch.

In this simple scenario a potential fraud can be committed as follows (Fig. 9B): A rogue person colludes with a dishonest clerk in the store. Both the rogue person and the dishonest clerk are in possession of a transceiver device (T1, T2). The dishonest clerk locates their transceiver T1 next to one of the POS 20c in the store. Then the rogue person approximates a known store customer in the street, a customer with a smartwatch 30c configured to allow payment in that store, without the customer being aware. As the rogue person places their transceiver T2 close to the smartwatch 30c, signals the clerk; the clerk makes a transaction in the POS and, as a message from the POS can reach the smartwatch via the transceivers, the smartwatch 30c receives the message, verifies a correct signature and payment is made without the customer noticing. This attack is called a replay attack. Although in reality the attack may be more sophisticated, this simplification shows the idea.

In order to prevent this replay attack, one state of the art mechanism would be to measure the time that the signal takes to travel between both devices, and obtain from this time the approximated distance between both devices, in the hope that the attack scenario would show a greater distance and so reveal the attack. However, as the communication between the POS and the smartwatch consists of a single message, there is no effective way to measure this distance. Therefore more than one message would be needed at least to ascertain that the watch is indeed physically in the store, in addition to more sophisticated logic and communication devices. Alternatively, the owner of the smartwatch may be required to perform an acknowledgement action in order to authorize the payment, which is less convenient for a user experience perspective.

By applying the disclosure described herein this attack may be prevented as follows (Fig. 9B): The Department Store is equipped with a guarantor entity 10c within the store server. The guarantor generates private keys for all POS 20c in the store and securely transmits each key to each POS 20c via network. The store server is located in a secure place so that tampering with the guarantor entity is prevented. The guarantor entity 10c generates the private key from a knowledge base that contains a predicate that evaluates to true whenever the smartwatch 30c is located inside the store. The smartwatch is equipped with a GPS device or alternatively can communicate with the user's smartphone equipped with a GPS device, so that the smartwatch knows its precise location. Whenever the smartwatch receives a message from a POS, it evaluates a predicate using its location as value for the location variable. In a replay attack situation, the query performed at the time of message authentication will evaluate to False, as the smartwatch's location does not match the store area as defined by the guarantor in the knowledge base. Consequently, whenever the smartwatch is outside the store payments will not be authorized.

Additionally, in case the mere presence of the smartwatch close to the POS is regarded as too simple a requirement to allow payment, it is also possible that a customer profile is loaded within the store server, so that the guarantor may specify further conditions for allowing payment, such as maximum amount, time period or specific POS identifiers for the automatic smartwatch payment method to be accepted. All these conditions may be conveniently configured in the store server, and the smartwatch need not be aware of them until the payment message arrives.

Next an application of the disclosure is described for a Wireless Sensor Network or WSN. In this case the scenario will not be fully detailed, and only an intuition of the advantages of using the present disclosure in a WSN scenario will be provided.

Several different definitions for what a WSN can be found in the literature. These are sometimes associated to what is it exactly that each sensor senses, for example physical or environmental conditions. A general view is adopted and a WSN is considered to be a number of wireless nodes which can receive and transmit messages wirelessly to one another, just depending on their proximity and radio range. Thus, sensors do not just sense conditions, but also may act as message proxies for other sensors in certain circumstances.

The point to the wireless nature of the transmission here is that such a network can be used to route messages across several devices, without the restrictions inherent to a wired network, which would only allow wired paths. In a WSN many different routes are possible since each sensor may be able to receive messages from several other sensors, and to send messages to various other sensors. Routes are needed to deliver messages from sensor to sensor and finally to specific end nodes which are used to collect information from the entire network. Routing information may be embedded in the sensor or be specified within the message. In a real WSN, routing paths would depend heavily in the deployment configuration and type of the sensors involved in the network.

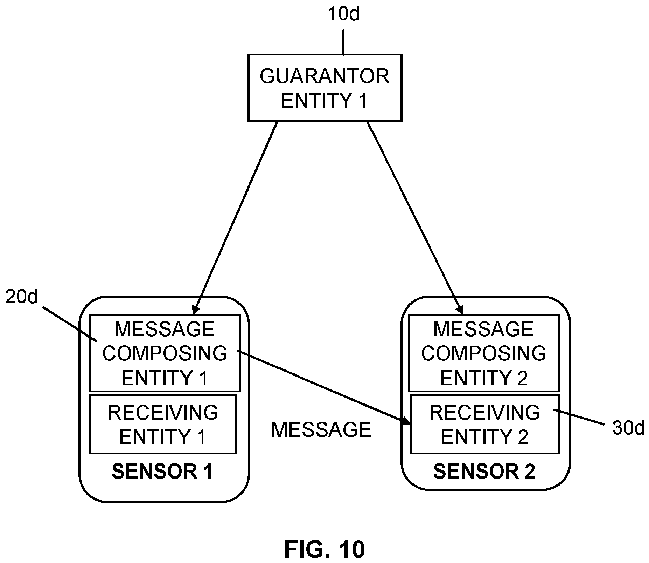

A simple way to characterize a sensor using our two layer hierarchy is depicted in Fig. 10. Any sensor is considered as a combination of a message-composing entity 20d and a receiving entity 30d. A guarantor entity 10d is able to communicate with the message-composing entity of each sensor in order to provide them with private keys and associated knowledge bases. In order to save energy, private keys update periods might differ from one type of sensor to another, and key updates might be commanded more or less frequently according to different strategies.

Typically, sensors in a WSN are deployed with an embedded logic to make decisions about message routing, with the purpose of finally delivering messages to one or more specific receiving entities that compile all information sensed by the network. It is of the essence that this routing logic is as efficient as possible, and this is a real challenge considering the changing circumstances of the WSN, such as broken sensors, expected lifetime or energy left in each different sensor. In addition, attacks to the network routing protocols also have to be considered. Attacks may involve the attacker impersonating other nodes, dropping packets, modifying packets or launching denial of service attacks, to name a few. Usually message routing strategies are derived from a tradeoff between energy consumption and security considerations.

Secure routing protocols for WSNs that may adapt to changing circumstances are difficult to be designed, especially as the nodes have limited resources such as low battery power, low CPU processing capacity, and/or low memory storage. Many routing protocols currently assume that nodes are trustworthy, security relying essentially in authentication, and are based on static predefined paths. However a node can be physically compromised, including its private key. A compromised node can easily change the routing of a message and redirect it to anywhere it wants.

More sophisticated solutions allow for compromised nodes by means of reputation strategies. These basically consists in each node observing the behavior of other nodes in the vicinity, detecting abnormal situations and taking decisions to trust or not to trust other nodes accordingly. However these solutions invariably require a number of control messages among nodes resulting in complex and unwanted processing overhead.

In order to realize the advantages of the present disclosure for this scenario, it must be noted that message routing can be decided on the fly in a broadcast environment by having each sensor taking a decision to retransmit or drop any received message, based on a number of circumstances such as the nature of the message, the entity that originated it, the entity that retransmitted it, the trust placed in the message or the energy remaining available to the sensor, to name a few. Therefore, routing solutions can also be the result of query evaluation, such that retransmitting or dropping a message is an action taken depending on the evaluation of the query.

In this context, the present disclosure not only provides an authentication solution for all messages in a simple way, but it also allows for decisions to be taken by nodes based on the logic of predicates and the value of internal variables that a sensor can measure. In particular, a routing solution can be implemented by making the decision of whether to drop or retransmit a message depend on a combination of logic originated in guarantor entities, logic from the sensor that originated the message and/or the state of the sensor that has just received the message and needs to decide whether to retransmit it or drop it. For instance such logic may trade-off between predefined paths originated at the guarantor entity, message urgency defined by the message composing entity, and remaining available energy in the receiving sensor. A more sophisticated solution could be designed by having the sensor that retransmits a message add some additional information such as its identifier or location, thus providing a path history that may be used not only to select a route but also to find defective or broken sensors.

Also routing rules can be enforced for specific periods of time and may be changed on the fly from the guarantor entity together with the private keys in case a compromised sensor is suspected.

Therefore, the application of the present disclosure in WSN provides a great extent of routing flexibility currently unavailable in this type of networks, and all this routing logic may be incorporated together within the message authentication mechanisms, for greater efficiency and security.

The present disclosure is obviously not limited to the specific embodiment(s) described herein, but also encompasses any variations that may be considered by any person skilled in the art (for example, as regards the choice of materials, dimensions, components, configuration, etc.), within the general scope of the disclosure as defined in the claims.

In this text, the terms "comprises", "includes" and its derivations (such as "comprising", "including", etc.) should not be understood in an excluding sense, that is, these terms should not be interpreted as excluding the possibility that what is described and defined may include further elements, steps, etc.

**Claims**

1. A computer-implemented method (300) for authenticating a message-composing entity (20, 20', 20a, 20c, 20d), the method comprising:

   - receiving a signed message (301) comprising a trusted knowledge base, a signature and a content; wherein the signature is generable by using a private key generable by processing the trusted knowledge base together with a Master Key, the trusted knowledge base comprising one or more clauses and/or predicates (P1 ,P2,P3, P4); wherein the content includes zero, one or more clauses and/or predicates (C1); wherein a predicate is a collection of one or more clauses and procedures, a clause is an expression that relates one or more variables and values by means of operators and a procedure is a set of computable instructions;
   - obtaining an expanded knowledge base, wherein the expanded knowledge base is obtained by adding zero, one or more clauses and/or predicates to the trusted knowledge base, wherein some of the added clauses and/or predicates may be obtained from the content;

- performing one or more queries over the expanded knowledge base; a query being a Boolean expression that poses a question on the relationships between variables and values by means of clauses and/or predicates; wherein at least one of the queries comprises a predicate that comprises a procedure for the verification of the signature; wherein the signature is verifiable with a public key generable by processing the trusted knowledge base;

- upon determining that the one or more queries evaluate to true, carrying out one or more resulting actions consistent with the results of the one or more queries and the content of the message.

2. The method of claim 1, wherein the predicate that comprises a procedure for the verification of the signature is a built-in predicate known and executable by the entity receiving the message.

3. The method of any one of claims 1 and 2, wherein the zero, one or more additional clauses and/or predicates that are added to the trusted knowledge base to obtain the expanded knowledge base relate to one or more values known or computable by an entity composing and signing the message, and/or one or more values known or computable by an entity receiving the message.

4. A computer-implemented method (200) for sending a message allowing authentication of a message-composing entity (20, 20', 20a, 20c, 20d), the method comprising:

- receiving a private key generable by processing a trusted knowledge base together with a Master Key, the trusted knowledge base comprising one or more clauses and/or predicates (P1,P2,P3,P4); a predicate being a collection of one or more clauses and procedures; a clause being an expression that relates one or more variables and values by means of operators; a procedure being a set of computable instructions;
- composing a message comprising the trusted knowledge base and a content; wherein the content includes zero, one or more clauses and/or predicates;
- signing the message with the private key to obtain a signed message comprising a signature, and
- sending the signed message comprising the trusted knowledge base, the signature and the content, the signature of the sent message being verifiable with a public key, the public key being obtainable by processing the trusted knowledge base.

5. The method of any one of claims 1 to 4, wherein the current time may be a variable that is included in one or more clauses and/or predicates.

6. The method of any one of claims 1 to 5, wherein the signed message comprises a nonce.

7. The method of any one of claims 1 to 6, wherein the private key is generable by using public domain parameters in addition to the Master Key and the trusted knowledge base, and/or wherein verifying the signature with the public key uses said public domain parameters.

8. The method of claim 7, wherein the public domain parameters comprise a public deterministic function; wherein the public key is obtainable by applying the public deterministic function to the trusted knowledge base; wherein the processing of the trusted knowledge base and the Master Key using public domain parameters to generate the private key may involve a first step in which the public key is obtained by applying the public deterministic function to the trusted knowledge base, and a second step in which the private key is obtained by processing the public key and the Master key using public domain parameters.

9. The method of any one of claims 7 and 8, wherein the generation of the public and private keys involves one or more mathematical procedures based on the mathematical properties of bilinear pairings and/or other primitives from pairing based cryptography.

10. The method of any one of claims 1 to 9, wherein the message comprises an identifier of a first entity generator of the private key; the public domain parameters being associated to the first entity; the method comprising retrieving the public domain parameters by using the identifier of the first entity.

11. The method of any one of claims 1 to 10, wherein the geographical location of an entity may be a variable included in one or more clauses and/or predicates.

12. The method of any one of claims 1 to 11, wherein the virtual address of an entity in a communication network may be a variable included in one or more clauses and/or predicates.

13. An entity (30, 30', 30a, 30b, 30c, 30d) for authenticating a message-composing entity, the entity comprising:

   - means for receiving a signed message comprising a trusted knowledge base, a signature and a content; wherein the signature is generable by using a private key generable by processing the trusted knowledge base together with a Master Key, the trusted knowledge base comprising one or more clauses and/or predicates; wherein the content includes zero, one or more clauses and/or predicates; a predicate being a collection of one or more clauses and procedures; a clause being an expression that relates one or more variables and values by means of operators; a procedure being a set of computable instructions;
   - processing means configured for

      • obtaining an expanded knowledge base, wherein the expanded knowledge base is obtained by adding zero, one or more clauses and/or predicates to the trusted knowledge base, wherein some of the added clauses and/or predicates may be obtained from the content;
      • performing one or more queries over the expanded knowledge base; a query being a Boolean expression that poses a question on the relationships between variables and values by means of clauses and/or predicates; wherein at least one of the queries comprises a predicate that comprises a procedure for the verification of the signature; wherein the signature is verifiable with a public key generable by processing the trusted knowledge base; and

   - upon determining that the one or more queries evaluate to true, the processing means are configured for carrying out one or more resulting actions consistent with the results of the one or more queries and the content of the message.

14. A message-composing entity (20, 20', 20a, 20c, 20d) for sending a message allowing authentication of the message-composing entity, the entity comprising:

   - means for receiving a private key generable by processing a trusted knowledge base together with a Master Key, the trusted knowledge base comprising one or more clauses and/or predicates; a predicate being a collection of one or more clauses and procedures; a clause being an expression that relates one or more variables and values by means of operators; a procedure being a set of computable instructions;
   - means for composing a message comprising the trusted knowledge base and a content; wherein the content includes zero, one or more clauses and/or predicates;
   - means for signing the message with the private key to obtain a signed message comprising a signature, and
   - means for sending the signed message comprising the trusted knowledge base, the signature and the content, the signature of the sent message being verifiable with a public key, the public key being obtainable by processing the trusted knowledge base.

15. A system for authenticating a message-composing entity (20, 20', 20a, 20c, 20d), comprising:

   - a message-composing entity (20, 20', 20a, 20c, 20d) for sending a message allowing authentication of the message-composing entity, the message-composing entity comprising means for carrying out the method of any one of claims 4 to 12; and
   - a second entity for authenticating the message-composing entity, the second entity comprising means for carrying out the method of any of claims 1 to 3 and of any one or none of claims 5 to 12.

16. A method for authenticating a message-composing entity, the method comprising:

   - a first computer-implemented method performed by a first entity, the first computer-implemented method comprising generating a private key by processing a trusted knowledge base together with a Master Key, the trusted knowledge base comprising one or more clauses and/or predicates;
   - a second computer-implemented method performed by the message-composing entity, the second computer-implemented method comprising:

      ▪ receiving the private key;
      ▪ receiving the trusted knowledge base;

- composing a message comprising the trusted knowledge base and a content;
- signing the message with the private key to obtain a signed message comprising a signature, and
- sending the signed message comprising the predicate, the signature and the content; and

- a third computer-implemented method performed by an entity for authenticating a message-composing entity, the third computer-implemented method comprising:

- receiving the signed message;
- obtaining an expanded knowledge base by adding zero, one or more clauses and/or predicates to the trusted knowledge base, wherein some of the added clauses and/or predicates may be obtained from the content;
- performing one or more queries over the expanded knowledge base; wherein at least one of the queries comprises a predicate that comprises a procedure for the verification of the signature; wherein the signature is verifiable with a public key generable by processing the trusted knowledge base; and
- upon determining that the one or more queries evaluate to true, carrying out one or more resulting actions consistent with the results of the one or more queries and the content of the message.

200

201

COMPOSE
MESSAGE

202

OBTAIN PRIVATE
KEY

203

SIGN MESSAGE

204

SEND SIGNED
MESSAGE

**FIG. 1**

20

| 21 | 22 | 23 | 24 |

**FIG. 2**

30

| 31 | 32 | 33 |

**FIG. 3**

**FIG. 4**

11    12    121    13    10

**FIG. 5**

100

101    1001

GENERATE
PRIVATE KEY

TRUSTED
KNOWLEDGE
BASE

121

SECURE
STORAGE

**FIG. 6**

**FIG. 7A**

```
<trustedKnowledgeBase>
<P1>
inArea (x,y)  IFF  [((72<x-2y<77)AND(214<x<228))OR(x^2+y^2-439x-
144y+53354<0)]   </P1>
<P2>
inTime(T)  IFF  [(weekday(T)=WorkingDay)  AND  ((8:30≤hour24(T)≤9:30)  OR
(15:30≤hour24(T)≤16:30)) ]    </P2>
<P3>
speedLimit(MAX_SPEED)   IFF   inArea(x,y)  AND inTime(T)  </P3>
<P4>
validKey(T) IFF [(20220201 00:00:01 ≤ {T} ≤ 20220228 23:59:59)]</P4>
</ trustedKnowledgeBase >
<content>
<type> speedLimit (Limit) </type>
<addClause>
MAX_SPEED=30
</addClause>
<guarantorId>
G1234 </guarantorId>
<nonce>
3457347687658671 </nonce>
</content>
<signature>
987BD166BC5947779A79514B5832A965327C27915462A58BD621
</signature>
```

## FIG. 7B

**FIG. 8A**

**FIG. 8B**

DEPARTMENT STORE

20c

30c

STORE
SERVER

FIG. 9A

DEPARTMENT STORE

20c

10c

30c

T1

T2

FIG. 9B

10d

GUARANTOR
ENTITY 1

20d

MESSAGE
COMPOSING
ENTITY 1

RECEIVING
ENTITY 1

**SENSOR 1**

MESSAGE

MESSAGE
COMPOSING
ENTITY 2

RECEIVING
ENTITY 2

30d

**SENSOR 2**

**FIG. 10**

Europäisches
Patentamt

European
Patent Office

Office européen
des brevets

# EUROPEAN SEARCH REPORT

Application Number

EP 22 38 2485

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/021537 A1 (WAGNER KIM RITTER [US] ET AL) 20 January 2022 (2022-01-20) * figure 10 * * paragraph [0006] – paragraph [0021] * * paragraph [0074] – paragraph [0098] * * paragraph [0108] – paragraph [0127] * * paragraph [0132] – paragraph [0163] * * paragraph [0178] – paragraph [0211] * | 1-16 | INV. H04L9/30 H04W12/02 |
| A | WO 2019/124953 A1 (LG ELECTRONICS INC [KR]) 27 June 2019 (2019-06-27) * figures 1,3a,3b,4a,4b,5a,5b,9,10 * * paragraph [0001] – paragraph [0023] * * paragraph [0063] – paragraph [0178] * | 1-16 | |
| A | HUAQUN WANG ET AL: "An Improved Binary Authentication Tree Algorithm for Vehicular Networks", INTELLIGENT NETWORKING AND COLLABORATIVE SYSTEMS (INCOS), 2012 4TH INTERNATIONAL CONFERENCE ON, IEEE, 19 September 2012 (2012-09-19), pages 206-213, XP032266051, DOI: 10.1109/INCOS.2012.27 ISBN: 978-1-4673-2279-9 * paragraph [00II] – paragraph [000V] * | 1-16 | TECHNICAL FIELDS SEARCHED (IPC) H04L H04W |

The present search report has been drawn up for all claims

| Place of search | Date of completion of the search | Examiner |
|---|---|---|
| Munich | 28 October 2022 | Bec, Thierry |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...............................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 38 2485

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2022

| Patent document cited in search report | Publication date | Patent family member(s) | Publication date |
|---|---|---|---|
| US 2022021537 A1 | 20-01-2022 | US 2022021537 A1<br>WO 2022015663 A1 | 20-01-2022<br>20-01-2022 |
| WO 2019124953 A1 | 27-06-2019 | US 2020322135 A1<br>WO 2019124953 A1 | 08-10-2020<br>27-06-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MOHAMED AMINE FERRAG et al.** *Authentication Protocols for Internet of Things: A Comprehensive Survey,* 2017